# EUROPEAN PATENT SPECIFICATION

(11) **EP 0 693 179 B1**
(45) Date of publication and mention of the grant of the patent: **30.07.1997**
(21) Application number: 94912032.3
(22) Date of filing: 07.04.1994
(51) Int. Cl.: G01N 21/57

(54) **A GONIOPHOTOMETER**
GONIOPHOTOMETER
GONIOPHOTOMETRE

(30) Priority: 07.04.1993 GB 9307279
(43) Date of publication of application: 24.01.1996
(73) Proprietor: Feather, James William, Rawdon, Leeds LS19 6PE (GB); Smith, Keith Beadsmore, Ripon, North Yorkshire HG4 1ER (GB)
(72) Inventor: Feather, James William, Rawdon, Leeds LS19 6PE (GB); Smith, Keith Beadsmore, Ripon, North Yorkshire HG4 1ER (GB)
(74) Representative: Johnstone, Helen Margaret
(86) International application number: GB9400747
(87) International publication number: WO9423283

(56) References cited:
- EP-A- 0 519 409
- US-A- 3 549 264
- US-A- 4 989 984
- ELECTRONICS & COMMUNICATIONS IN JAPAN, PART II - ELECTRONICS, vol.69, no.6, 1986, NEW YORK US pages 91 - 100 T. AIDA ET AL. 'Method for measuring the glossiness of curved surfaces using charge-coupled-device line sensor'

## Description

This invention relates to a goniophotometer, and particularly, but not exclusively to a goniophotometer for use in the characterisation of glossy surfaces.

Gloss describes the perception of the shiny or lustrous appearance of a surface as experienced by an observer when light is reflected from that surface. It is most pronounced with polished metal surfaces eg mirrors, where it is found that a sudden increase in brightness occurs at or near to the specular angle, that is when the angle of observation is equal to the angle of incidence of the light onto the surface as measured from the normal to the surface.

Standard gloss meters measure gloss by the extent to which the surface simulates a perfect mirror in its capacity to reflect incident light. A collimated beam of light is shone onto the surface and the amount of light reflected at the specular angle measured. The International Standard ISO 281301978 "Measurement of Specular Gloss" describes 20 degrees as the preferred standard specular angle for the better differentiation of reflected light intensity in the high gloss range. Standard practice also refers to the use of highly polished black glass with a refractive index of 1.567 as the reference surface assigned a specular gloss value of 100 for each geometry.

Decreases in gloss arise primarily from imperfections in, and roughness of, the surface, which causes light to be reflected at angles slightly offset from the specular angle. A standard gloss meter detects decreases in gloss but does not provide quantitative or qualitative information on the angular distribution of the reflected light around the specular angle, which could be used to characterise the surface features responsible.

The characterisation of gloss has been described in terms of six different visual criteria based upon reflectance measurements at specified angles (RS Hunter, 1952, "Gloss Evaluation of Materials" ASTM Bulletin No 186) as set out below:

| Types of Gloss | Visual Characteristics | Types of Surfaces |
|---|---|---|
| Specular Gloss | Shininess, brilliance of highlights | Medium-Gloss surfaces of book paper, paint, plastics, etc |
| | | |
| Sheen | Shininess at grazing angles | Low gloss surfaces of paint, paper etc |
| | | |
| Contrast gloss or lumer | Contrast between specularly reflecting areas and other areas | Low gloss surfaces of textile fiber, yarn and cloth,newsprint bond paper, diffuse finish metals, hair, fur etc |
| | | |
| Absence of bloom gloss | Absence of haze or milky appearance, adjacent to reflected highlights | High and semi-gloss surfaces in which reflected highlights may be seen |
| | | |
| Distinctness of image gloss | Distinctness and sharpness of mirror images | High-gloss surfaces of all types in which mirror images may be seen |
| | | |
| Surface uniformity gloss | Surface uniformity freedom from visible non uniformities such as texture | Medium-to-high gloss surfaces of all types |
| | | |

Subjective assessments of gloss are widely made but agreement between observers can be poor.

Attempts to rate or measure distinctness of image; bloom; haze and surface uniformity have been described in the literature. The visual methods generally consist of a viewing box with a light source in front of which is a translucent screen bearing rows of laterally inverted letters or numbers. These characters decrease in height on reading down the rows. A panel of the surface to be assessed is positioned at the far end of the box and viewed through an aperture above the light source. The distinctness-of-image is given as a rating in terms of the character at which the observer considers that image distortion ceases, but the precise end point is still open to individual interpretation.

A modification has been developed to introduce greater objectivity into the viewing box method by interrupting the light beam by a rotating optical comb and monitoring the flickering light by a single photo-multiplier detector.

A disadvantage of measuring the progression from light to darkness induced in this way or by grid patterns is that the results are empirical and still require to be related subjectively to observed perceptions of gloss and haze.

Objective instrumental methods for the assessment of gloss and haze use a technique called goniophotometry, in which the angular distribution of light reflected from a surface is measured. A goniophotometer usually comprises a light source and associated optics, which serve to illuminate a test surface with collimated light at a desired angle of incidence, and a single light detector which can be moved in an arc centred at the point of illumination on the surface. Measurements of the reflected light intensity are made at many discrete angles of reflectance around this arc. The data obtained provides information on the light reflecting properties of the surface.

A known device, known as a gloss meter comprises a single light detector which is fixed. Because the light detector is not moveable, measurements must be taken by measuring the light falling on the single detector. This however gives incomplete information in that light not falling on the detector is not measured at all.

Thus in order to obtain fuller information, it is necessary to move the single light detector around the centre point of illumination in order to measure the intensity of light falling at different points around the centre point as described hereinabove.

Past studies of the sharpness of image and the angular distribution of light have indicated the importance of measuring the degree of diffusion of the specular light. However, the relevant angular widths or deviations from the specular angle are less than 2 degrees, and it has proved difficult to achieve reproducible readings in this region with goniophotometers of variable geometry.

Qualities such as distinctness of image relate to such small angular deviations from the specular that they challenge the limits of resolution attainable with instruments using a single photodetector.

The known goniophotometers have been time consuming to use, both in the setting up and in the analysis of the results which are much influenced by the dimensions of the instrument, particularly the width of the slit aperture at the detector in relation to that at the source.

Furthermore, an instrument sensitive to distinctness of image must be able to resolve the rapid transition from specular to diffuse reflection caused by small changes in the angle of viewing.

In the case of photoelectric cell detectors this is achieved by using a field stop with a narrow aperture to limit the angle of acceptance to a minimum but not so narrow as to prevent sufficient light flux from reaching the detector to generate a signal of adequate strength.

Consideration of the six different visual criteria mentioned hereinabove has led workers in the field to attempt to measure the ratio between specular reflectance and very narrow angle-off specular reflectance.

A method for measuring the glossiness of curved surfaces using a charge-coupled device line sensor is disclosed in Electronics and Communications in Japan Part II - Electronics, Volume 69, Number 6, 1986, New York, USA, pages 91 to 100 T Aida et al.

According to the invention there is provided a goniophotometer comprising:
a light source;
an aperture through which light from the light source may be directed onto a surface under examination; and
detector means comprising a plurality of detector units onto which an image of the aperture is focused by focusing means, arranged such that in use the aperture has a width which is substantially of the same order of magnitude as the width of a detector unit.

By means of the present invention, the angular distribution of light reflected from the surface to be tested may be measured. The goniophotometer according to the present invention effectively measures the effect of the surface on the image of the aperture, which image is focused onto the surface of the detector means.

By having a detector means comprising a plurality of detector units, detailed information relating to the surface under test may be gleaned by measuring the intensity of the light falling on each of the individual detectors forming the detector means.

The present invention thus measures variations in reflected light flux at or about the specular angle whilst avoiding the signal distortions caused by narrow field stops or moving components which obscure the foot of the goniophotometric curve.

Preferably, the goniophotometer further comprises focusing means for forming the light into a collimated beam after it has passed through the aperture for focusing onto the surface to be tested, and for focusing reflected light onto the detector means.

Preferably the focusing means comprises a first lens for collimating the light prior to illuminating the surface to be tested, and a second lens for focusing the reflected light onto the detector means.

Preferably, the width of the aperture is substantially equal to twice the width of a detector unit.

Advantageously, an individual detector unit and the aperture are of substantially the same shape preferably rectangular.

Alternatively, the aperture may be circular, for example, formed from a small pin hole, the width of which pin hole is substantially equal to the width of an individual detector unit.

In such a situation, the height of the aperture will be less than the height of an individual detector, and thus the invention will not be is efficient as it could otherwise have been.

Standard gloss meters use an incandescent bulb as a source of light but suffer some instability from heat expansion of the filament and from its fragility. It is preferred, for the purposes of this invention, to use a light emitting diode.

Preferably the detector means comprises a linear photodiode array comprising individual photodiodes.

Although a conventional goniophotometer comprising a single but moveable detector may be used to obtain information regarding a surface under test by moving the single detector, it is not normally possible to obtain detailed information from such a device. By means of the present invention, the data may be quantified in fine steps at angles of high resolution.

In other words, the goniophotometer of the present invention can record and interpret the variation of light intensity at or near to the angle of specular reflection in a series of high resolution steps to give a reflected light intensity profile.

The present invention does not require any stops; field apertures, or filters in the path of the reflected light and thereby allows detailed measurements to be made of the variation of light intensity up to several degrees on either side of the specular angle.

The present invention provides a goniophotometer which is adapted to measure surface gloss and haze without the need for moving parts. In addition, the present invention may be used to measure surface gloss and haze at a sufficient speed to enable the measurement of gloss of moving objects.

Additionally, the present invention provides a goniophotometer adapted to measure gloss and haze and being of sufficiently compact size and weight to enable the convenient carrying and use of the apparatus according to the invention. In addition, the power consumption of the apparatus according to the present invention is low and therefore it may be battery powered.

In use, light which passes through an aperture is collimated into a beam which then illuminates the surface to be measured. Light reflected at or near the specular angle is collected and focused by a lens onto a linear photodetector array, so that an image of the source aperture is formed on the array. The signal from each photodetector element of the array is processed and stored in a microprocessor memory. Calculations are made upon the stored data to enable a profile of light intensity versus reflected angle to be plotted. The shape of this profile provides information to identify and quantify surface imperfections.

The invention will now be further described by way of example only with reference to the accompanying drawings in which:
Figure 1 is a schematic representation of a goniophotometer according to the present invention;
Figure 2 is a schematic representation of the optical system forming part of the apparatus of Figure 1;
Figure 3 is a schematic representation of the electronic system forming part of the goniophotometer of Figure 1;
Figure 4 shows the profile of angular distribution of the reflectance intensities from a surface to be tested using apparatus of Figure 1;
Figures 5a to 5f illustrate schematically the type of signal obtained relative to the position of light falling on a particular diode when width of an individual photodiode is approximately equal to that of the aperture, and both are substantially rectangular in shape; and
Figures 6a to 6f show the signal produced when the width of an individual photodiode is half that of the aperture.

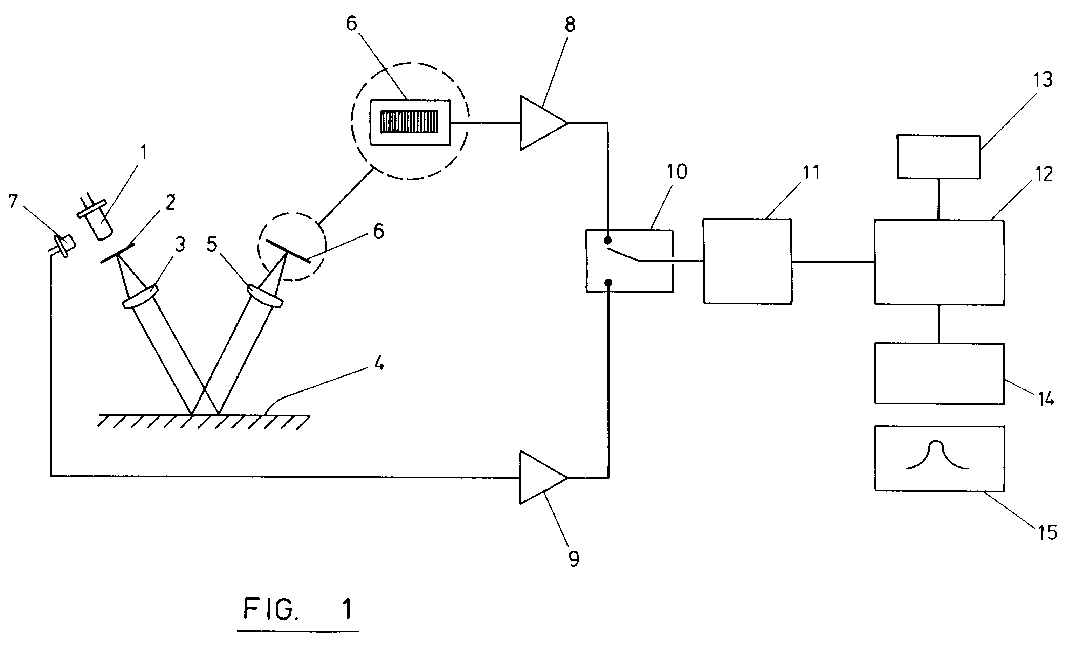

Referring to the Figures, the apparatus according to the present invention is designated generally by the reference numeral 100, in terms of its optical and electronic subsystems, details of which are set out below with reference to figures 1, 2 and 3. Equivalent parts have been given equivalent reference numbers in each of the Figures.

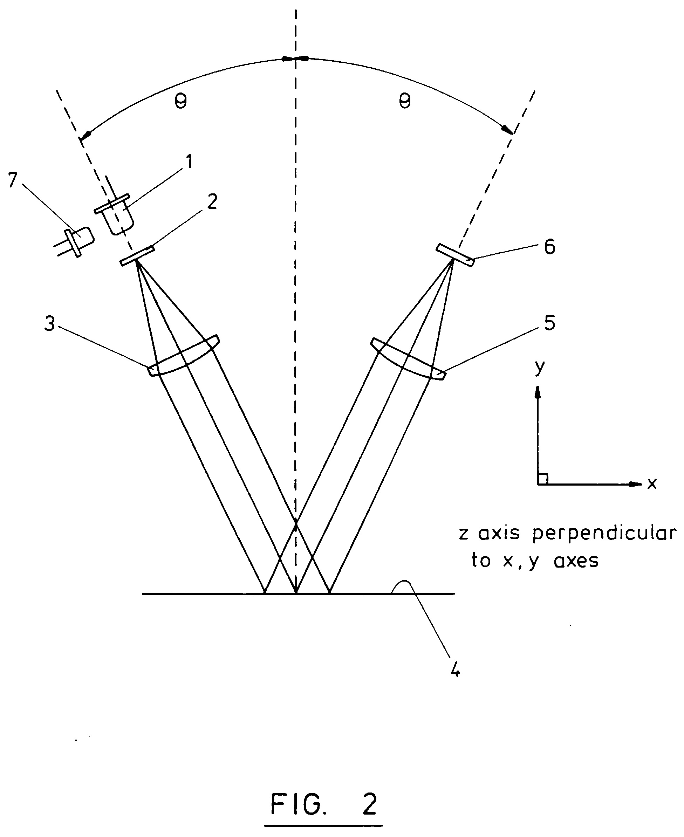

Figure 2 shows an embodiment of the optical system of the apparatus 100 of the invention. The preferred geometrical and optical elements of this instrument are based upon dimensions described in the Standards ISO 2813-1978 and ASTM D523. A light source 1 comprising a light emitting diode, illuminates an aperture 2. Light transmitted through the aperture is collimated by a lens 3. The surface under examination 4 is thereby illuminated with a collimated beam of light at a fixed angle of incidence θ (as measured from the normal to the surface (axis y)). The diode emitter 1 is considered appropriate for rigid portable instruments because it is compact, has a low power requirement, is mechanically stable and is a durable light source. The aperture 2 is of narrow dimension in the direction perpendicular to the x-y plane. The shape of the source aperture is matched to the shape of the photosensitive elements of the detector array. The width of the aperture (perpendicular to the x-y plane) is twice the width of the photosensitive elements of the detector array. The surface under examination 4 lies in the x-z plane. Light reflected at or close to the specular angle is collected by a focussing lens 5. An image of the source aperture plane is formed in the plane of the photodetector array 6. The light sensitive elements of the photodetector array are silicon photodiodes, typically 128 to 1024 in number based on 25µm or 50µm centres. Preferably, an additional photodetector 7 (the reference detector) views the light source directly. The signal from this detector is used to correct for variations in the light output of the source from measurement to measurement.

The high resolution of this instrument has been calculated by considering an example where the reflected light path is 5 centimetres, the number of photodetector array elements is 256 and the pitch between them is 50µm. This particular example gives an angular resolution of 3.44 minutes, with measurements being made at +/- 7.3 degrees around the specular angle.

Each element of the photodetector array provides an electrical signal proportional to the amount of light it has received during the measurement period. The signals from each detector element, along with that from the reference detector, are sequentially transmitted to electronic circuitry. A typical measurement for a high gloss surface would be completed within 200 milliseconds whilst a low gloss measurement may take approximately 1 second to complete.

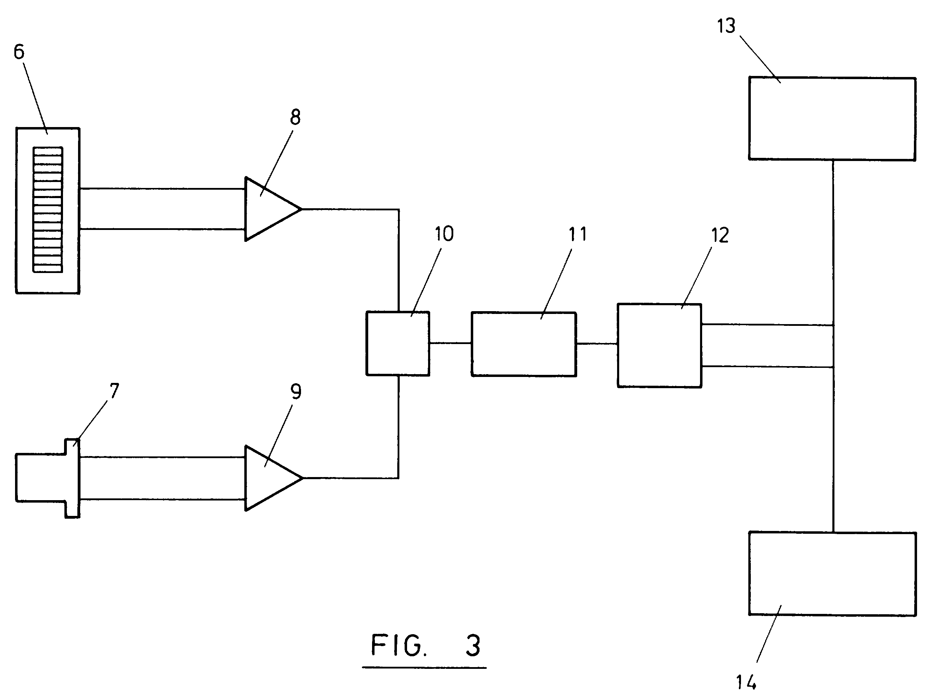

An embodiment of the electronic system of the apparatus of Figure 1 is shown in more detail in Figure 3. The incoming signals from the photodetector array are passed via an operational amplifier 8 to a multiplexer 10. The signal from the reference detector is passed via an operational amplifier 9 to the multiplexer 10. The multiplexer 10 is used to select either the signal from the array detector or the signal from the reference detector to be passed to an analogue to digital converter 11. The digitised signal is then stored in the memory of a micro-controller 12 for subsequent data manipulation. The micro-controller may be connected to a display 13 (preferably a low power liquid crystal display) directly for readout of the results or via a remote microcomputer system 14 for display on a VDU or for further calculation purposes.

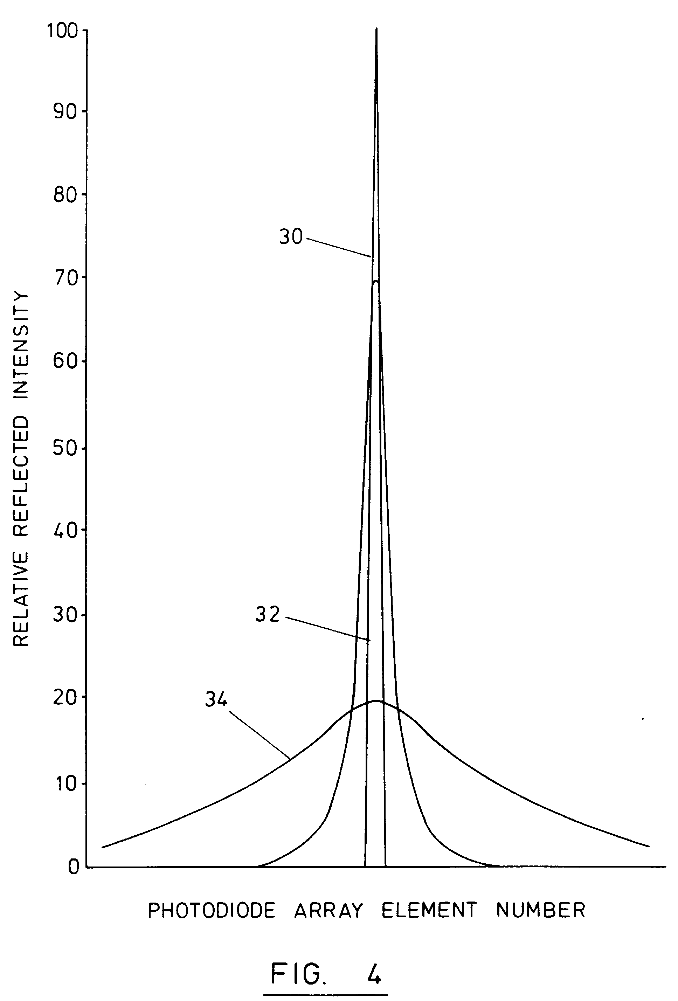

The apparatus provides a profile of the angular distribution of the reflectance intensities from the surface, as illustrated in Figure 4. Using a rectangularly shaped source aperture of equal dimensions to a single photodetector element for a perfect gloss surface the image of the aperture will illuminate a single detector element giving the reflectance profile of curve 30. With increasing amounts of imperfections on the surface, ie increasing haze, the image of the aperture will fall upon a wider range of photodetector elements, hence the reflectance profiles will widen as shown in curves 32 and 34.

Since the apparatus has a high angular resolution and the data provides a pseudo-continuous measure of reflected light intensity with angular deflection the relationship between gloss and haze can be operator defined. Consequently, numerous indices of gloss and haze can be defined and calculated, enabling the indices to be tailored to the study of any desired class of surface features. For example, the sum of the signal from the 3 photodiodes centred on the specular angle is extremely sensitive to small amounts of haze being present, decreasing rapidly from the value for a perfect gloss surface. In contrast, the sum of the signal from the extreme 20 diodes will change only when large amounts of haze are present. As examples, parameters of gloss may be the width of the curve between the 1/4 peak height points or the integral under the curve between the 1/4 peak height points.

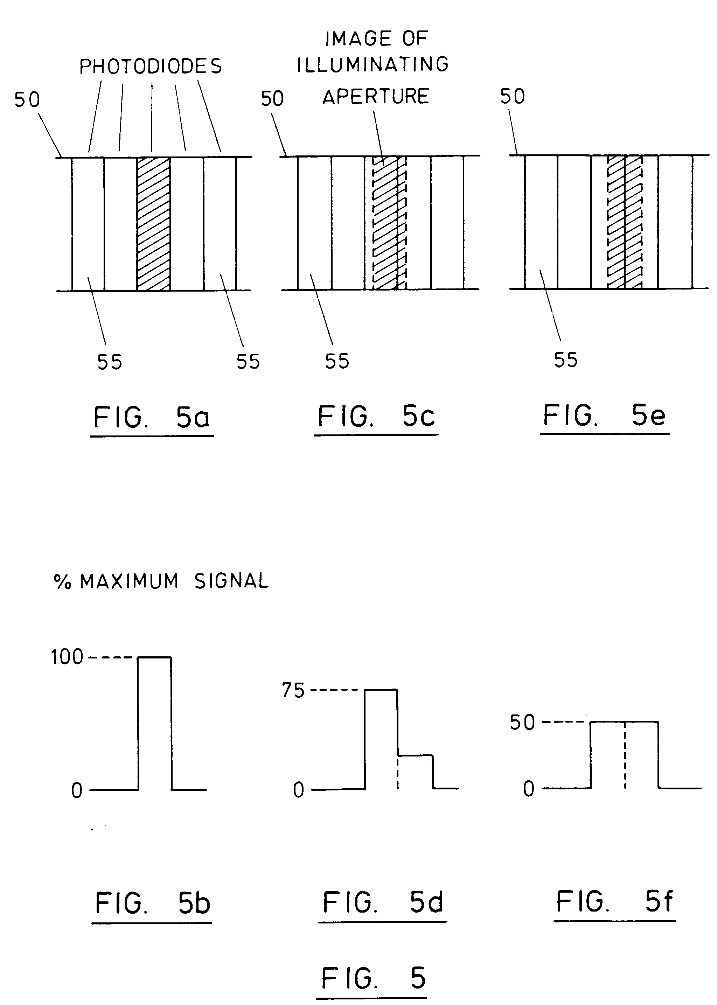

Consider the case for a rectangular source aperture whose width is equal to the photodetector element width. To obtain a true 100% gloss value, the image of the aperture must fall precisely upon a single photodetector element. Figure 5 illustrates the point, showing the aperture image position (shaded area) on the photodetector array and the corresponding measured relative signal intensities. Figure 5b illustrates the percentage of maximum signal obtained when the illuminated detectors are as shown in Figure 5a. Similarly, Figure 5d shows the percentage of maximum signal obtained for the illumination shown in Figure 5c, and Figure 5f shows the percentage of maximum signal obtained for the illumination shown in Figure 5e.

Referring to Figures 5a, 5c and 5e a portion of a linear photodetector array is designated generally by the reference numeral 50. The detector array comprises a plurality of individual photodetectors 55. The position of the image on the array 50 is represented by a shaded area.

In Figure 5a the image and one of the photodetector elements are perfectly aligned giving the maximum signal value. This gives a maximum signal of 100% as shown in Figure 5b. In Figure 5c the image is offset by 1/4 the width of a diode, the signal measured is 75% of the maximum value (Figure 5d). In Figure 5e the image is offset by 1/2 the width of a diode, the signal measured is only 50% of the maximum value (Figure 5f).

Consider now a case in which the instrument was set to view a surface with some degree of haze, the image width would increase. In the case illustrated in Figures 5a and 5b, adjacent diodes would be illuminated and the measured maximum value would fall, correctly indicating a decrease in gloss. However, in the case illustrated in Figures 5c and 5e, if the image spread is small, it is possible that still only the two central diodes would be illuminated and no decrease in gloss would be observed.

It is apparent that to obtain a true 100% gloss value the image of the aperture must illuminate fully one photodetector at all times. For an aperture width equal to the photodetector width, perfect alignment of the aperture image and photodetector element would have to be achieved at all times. This is impracticable in a commercial, portable instrument since lateral movement of the image across the photodetector elements could occur if the surface being measured was not perfectly flat.

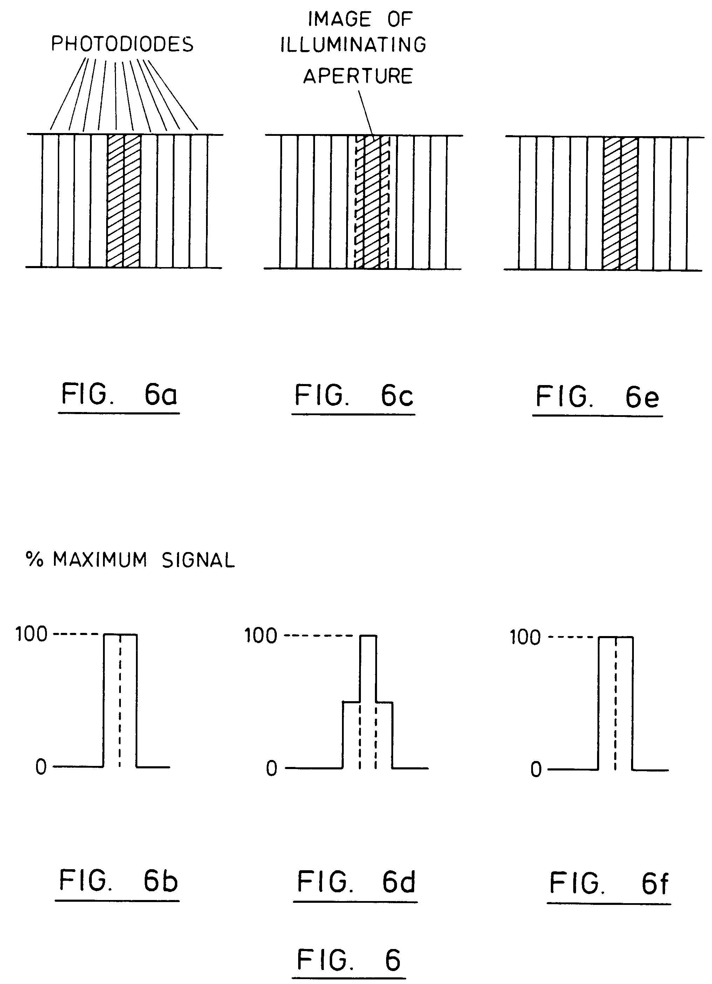

To overcome this problem, it is preferred that the width of the aperture should be twice that of each photodetector element in the array as shown in Figures 6a to 6f. Figures 6b, 6d and 6f show the maximum signal obtained for illumination illustrated in Figures 6a, 6c and 6e respectively. As shown in these figures whatever the lateral position of the image at least one photodetector element will be fully illuminated. A similar treatment to that given in Figure 5 shows that in all cases, an increase in haze will always decrease the maximum value measured.

The photodetector which provides the maximum signal will lie at the specular angle. Should this angle change between measurements, for example, due to a change in the angle that the surface under examination makes with the optical system of the instrument, then this can be allowed for by defining the lateral position of the maximum intensity image as corresponding to the true specular position. Hence, calculation of gloss and haze indices will be little affected. In other words, if the position and/or orientation of the surface under examination results in the position of the detector which has maximum intensity being offset from a central position, this can be allowed for when interpreting the results.

It is current practise that all measurements on test surfaces are compared with one taken on a black glass standard gloss surface. This reference measurement may be taken either immediately before any test surface measurement or at some earlier time and stored in the micro-controller memory. It is important that this standard measurement provides a true value for 100% gloss, against which all subsequent measurements can be compared.

The disclosure in this application is intended to be by way of example only, and it is to be understood that alternative materials and dimensions and means may be employed, as may be judged appropriate by the man skilled in the art, having regard to the purpose and advantages of the disclosed embodiment. Likewise, it is intended that the features specifically disclosed herein, suitably broadened in accordance with the foregoing sentence, will, in due course, form a basis for a selection of features defining an invention having novelty and inventive step, such selection to be made in due course, in accordance with the purpose and advantages of the disclosed embodiments.

Where, in the foregoing description certain features are disclosed in combination with each other, it is to be understood that these features are not necessarily intended to be limited to use in combination for the purposes of the invention in general, and it is hereby stated that features disclosed herein are to be treated as independently selectable for the purposes of the invention claimed.

## Claims

1. A goniophotometer (100) comprising:
a light source (1);
an aperture (2) through which light from the light source may be directed onto a surface under examination (4); and
detector means comprising a plurality of detector units (6) onto which an image of the aperture (2) is focused by focusing means (3; 5), arranged such that in use the image of the aperture (2) has a width which is substantially of the same order of magnitude as the width of a detector unit (6).

2. A goniophotometer (100) as claimed in claim 1 wherein the focusing means (3; 5) is for forming a collimated beam of light after the light from the light source is passed through the aperture, and for focusing reflected light onto the detector means.

3. A goniophotometer (100) according to claim 2 wherein the focusing means comprises a first lens (3) for forming the collimated beam, and a second lens (5) for focusing reflected light onto the detector means.

4. A goniophotometer (100) according to any one of the preceding claims wherein the width of the image of the aperture (2) is substantially equal to twice the width of a detector unit (6).

5. A goniophotometer (100) according to any one of the preceding claims wherein an individual detector unit (6) and the image of the aperture (2) are of substantially the same shape.

6. A goniophotometer (100) according to claim 5 wherein an individual detector unit (6) and the image of the aperture (2) are both substantially rectangular.

7. A goniophotometer (100) according to any one of claims 1 to 4 wherein the aperture (2) is substantially circular, the diameter of the image of the aperture being substantially equal to the width of an individual detector unit (6).

8. A goniophotometer (100) according to any one of the preceding claims wherein the light source (1) comprises a light emitting diode.

9. A goniophotometer (100) according to any one of the preceding claims wherein the detector (6) comprises a linear photodiode array in which the detector units are photodiodes.

## Patentansprüche

1. Goniophotometer (100) mit:
einer Lichtquelle (1);
einer Öffnung (2), durch welche Licht von der Lichtquelle auf eine zu prüfende Oberfläche gerichtet werden kann; und
einer Detektoreinrichtung, welche eine Mehrzahl von Detektoreinheiten (6) umfaßt, auf welche ein Bild der Öffnung (2) durch eine Fokussiereinrichtung (3;5) fokussiert wird, die so eingerichtet ist, daß im Gebrauch das Bild der Öffnung eine Breite aufweist, die im wesentlichen von derselben Größenordnung wie die Breite einer Detektoreinheit (2) ist.

2. Goniophotometer (100) nach Anspruch 1, bei welchem die Fokussiereinrichtung (3; 5) dazu dient, einen kollimierten Lichstrahl zu erzeugen, nachdem das Licht von der Lichtquelle die Öffnung passiert hat, und reflektiertes Licht auf die Detekktroeinrichtung zu fokussieren.

3. Goniophotometer (100) nach Anspruch 2, bei welchem die Fokussiereinrichtung eine erste Linse (3) umfaßt, welche den kollimierten Strahl erzeugt, sowie eine zweite Linse (5), welche reflektiertes Licht auf die Detektoreinrichtung fokussiert.

4. Goniophotometer (100) nach einem der vorhergehenden Ansprüche, bei welchem die Breite des Bildes der Öffnung (2) im wesentlichen gleich der doppelten Breite einer Detektoreinheit (6) ist.

5. Goniophotometer (100) nach einem der vorhergehenden Ansprüche, bei welchem eine individuelle Detektoreinheit (6) und das Bild der Öffnung (2) im wesentlichen dieselbe Form aufweisen.

6. Goniophotometer (100) nach Anspruch 5, bei welchem sowohl eine individuelle Detektoreinheit (6) als auch das Bild der Öffnung (2) im wesentlichen rechteckig sind.

7. Goniophotometer (100) nach einem der Anprüche 1 bis 4, bei welchem die Öffnung (2) im wesentlichen kreisförmig ist, wobei der Durchmesser des Bildes der Öffnung im wesntlichen gleich der Breite einer individuellen Detektoreinheit (6) ist.

8. Goniophotometer (100) nach einem der vorhergehnden Ansprüche, bei welchem die Lichtquelle (1) eine lichtemittierende Diode umfaßt.

9. Goniophotometer (100) nach einem der vorhergehenden Ansprüche, bei welcher der Detektor (6) ein lineares Photodioden-Array umfaßt, in welchem die Detektoreinheiten Photodioden sind.

## Revendications

1. Goniophotomètre (100) comprenant :
une source lumineuse (1) ;
une ouverture (2) à travers laquelle la lumière provenant de la source lumineuse peut être dirigée vers une surface à examiner (4) ; et
des moyens de détection comprenant une pluralité d'unités de détection (6) sur lesquelles une image de l'ouverture (2) est focalisée par des moyens de focalisation (3 ; 5), agencés de telle sorte que, en utilisation, l'image de l'ouverture (2) ait une largeur sensiblement du même ordre de grandeur que la largeur d'une unité de détection (6).

2. Goniophotomètre (100) selon la revendication 1, dans lequel les moyens de focalisation (3 ; 5) sont conçus pour former un faisceau collimaté de lumière après le passage de la lumière provenant de la source lumineuse par l'ouverture, et pour focaliser la lumière réfléchie sur les moyens de détection.

3. Goniophotomètre (100) selon la revendication 2, dans lequel les moyens de focalisation comprennent une première lentille (3) destinée à former le faisceau collimaté, et une seconde lentille (5) destinée à focaliser la lumière réfléchie sur les moyens de détection.

4. Goniophotomètre (100) selon l'une quelconque des revendications précédentes, dans lequel la largeur de l'image de l'ouverture (2) est sensiblement égale à deux fois la largeur d'une unité de détection (6).

5. Goniophotomètre (100) selon l'une quelconque des revendications précédentes, dans lequel une unité de détection individuelle (6) et l'image de l'ouverture (2) ont sensiblement la même forme.

6. Goniophotomètre (100) selon la revendication 5, dans lequel une unité de détection individuelle (6) et l'image de l'ouverture (2) sont toutes deux sensiblement rectangulaires.

7. Goniophotomètre (100) selon l'une quelconque des revendications 1 à 4, dans lequel l'ouverture (2) est sensiblement circulaire, le diamètre de l'image de l'ouverture étant sensiblement égal à la largeur d'une unité de détection individuelle (6).

8. Goniophotomètre (100) selon l'une quelconque des revendications précédentes, dans lequel la source lumineuse (1) comprend une diode électroluminescente.

9. Goniophotomètre (100) selon l'une quelconque des revendications précédentes, dans lequel le détecteur (6) comprend une matrice linéaire de photodiodes dans laquelle les unités de détection sont des photodiodes.
